# EUROPEAN PATENT SPECIFICATION

(11) **EP 4 375 173 B1**
(45) Date of publication and mention of the grant of the patent: **06.05.2026**
(21) Application number: 23211395.1
(22) Date of filing: 22.11.2023
(51) Int. Cl.: B62H 1/02

(54) **BICYCLE KICKSTAND**
FAHRRADSEITENSTÄNDER
BÉQUILLE DE VÉLO

(30) Priority: 24.11.2022 IT 202200024180
(43) Date of publication of application: 29.05.2024
(73) Proprietor: Ursus S.P.A., 36027 Rosà (VI) (IT)
(72) Inventor: FERRONATO, Sergio, 36027 ROSÀ(VI) (IT); FERRONATO, Simone, 36027 ROSÀ (VI) (IT); FERRONATO, Mirko, 36027 ROSÀ (VI) (IT)
(74) Representative: Marchioro, Paolo

(56) References cited:
- CN-U- 205 131 432
- DE-U1- 8 715 259
- IT-A1- UB20 153 964
- "Improved Reggiciclo", EPODOC, EUROPEAN PATENT OFFICE, THE HAGUE, NL, 18 May 2016 (2016-05-18), XP002809461

## Description

The invention concerns a bicycle kickstand such as disclosed for example in ITUB20153964 A1.

The currently known bicycle kickstands generally comprise a fixing bracket suited to be fixed to a lower part of a bicycle, to which bracket a rod with a foot suited to be rested on the ground is hinged.

The supporting rod is hinged to the fixing bracket and is configured to assume a raised resting position, in which the supporting rod is rotated upwards and adjacent to the bicycle frame, and a lowered working position, in which the same supporting rod is rotated downwards so that it rests on the ground. Such a kickstand also comprises reversible locking means configured to stabilize the position of said supporting rod with respect to said fixed bracket, either in a raised resting position or in a lowered working position.

The fixing bracket comprises a back wall whose lower edge is positioned in such a way that it comes into contact with the supporting rod when the supporting rod is in said raised resting position.

The reversible locking means generally comprise:
- a supporting rod hinge head, wherein the hinge head has a cam-shaped profile, said hinge head being positioned in a hinge compartment defined in said fixing bracket;
- a plate-shaped element, positioned within the hinge compartment in said fixing bracket and pushed against said cam-shaped profile;
- a coil spring positioned so as to push on said plate-shaped element inside said hinge compartment.

Such known kickstands have a limitation related to the fact that the supporting rod, in its raised position, hits repeatedly against the lower edge of the back wall of the fixing bracket, which is due to the oscillation of the supporting rod itself, which in the presence of uneven ground tends to vibrate, rotating downwards by a few degrees and then being rotated in the opposite direction by the effect of the coil spring of the reversible locking means.

Vibrations cause acoustic phenomena, and vibratory phenomena in general, which can be very annoying for the cyclist.

The task of the present invention is to develop a kickstand capable of overcoming the aforementioned drawback and limitation of the known technique.

More specifically, one object of the invention is to develop a kickstand that is less likely to emit vibrational noise than the known kickstands.

The task and the objects mentioned above are fulfilled by a kickstand according to claim 1.

Further characteristics of the kickstand according to claim 1 are described in the dependent claims.

The task and the above-mentioned objects, together with the advantages that will be mentioned below, are highlighted in the description of three embodiments of the invention, which are provided by way of non-limiting example, with reference to the attached drawings, wherein:
- Figure 1 shows an overall cross-sectional side view of a first embodiment of a kickstand according to the invention;
- Figure 2 shows a partially exploded, cross-sectional side view of the first embodiment of a kickstand according to the invention;
- Figure 2A shows an exploded perspective view of the kickstand according to the invention shown in Figures 1 and 2;
- Figure 3 shows a second embodiment of a kickstand according to the invention;
- Figure 4 shows a third embodiment of a kickstand according to the invention;
- Figures 5 and 6 show a fourth embodiment of a kickstand that is not part of the invention;
- Figures 7 and 8 show a further variant embodiment of a kickstand that is not part of the invention.

With reference to the above-mentioned figures, a kickstand according to the invention is indicated as a whole by the number **10.**

Said bicycle kickstand **10** comprises:
- a fixing bracket **11** configured to be fixed to a bicycle frame, the latter not being illustrated for the sake of simplicity;
- a supporting rod **12**, said supporting rod **12** being hinged to said fixing bracket **11** and being configured to assume a raised resting position, in which said supporting rod **12** is rotated upwards and adjacent to the bicycle frame, and a lowered working position, in which the supporting rod **12** is rotated downwards so that it rests on the ground;
- reversible locking means **13** configured to stabilize the position of said supporting rod **12** with respect to said fixing bracket **11,** either in said raised resting position or in said lowered working position.

The fixing bracket **11** comprises a back wall **14** whose lower edge **15** is positioned in such a way that it comes into contact with the supporting rod **12** when the supporting rod **12** is in said raised resting position.

The peculiarity of the invention lies in that the supporting rod **12** comprises an anti-vibration body **20** fixed in such a position that when said supporting rod **12** is in the raised resting position said anti-vibration body **20** is in contact with the lower edge **15** of said back wall **14.**

In the present embodiment example of the invention, the reversible locking means **13** comprise:
- a hinge head **16** of said supporting rod **12**, wherein said hinge head **16** has a cam-shaped profile **17**, the hinge head **16** being positioned in a hinge compartment **22** defined in the fixing bracket **11;**
- a plate-shaped element **18** positioned within the hinge compartment **22** in said fixing bracket **11** and pushed against said cam-shaped profile **17**;
- a coil spring **19** positioned so as to push on the plate-shaped element **18** inside the hinge compartment **22.**

The fixing bracket **11** comprises:
- two opposite side walls **24**, **25**;
- said back wall **14**;
- a front wall **26**, opposite the back wall **14.**

The hinge head **16** is hinged to said side walls **24**, **25** with a fulcrum **27.**

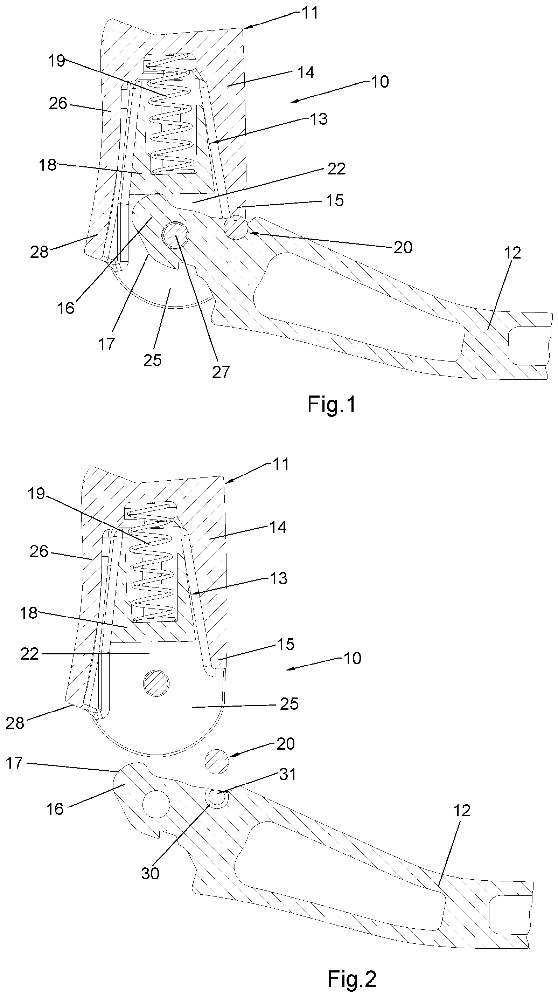

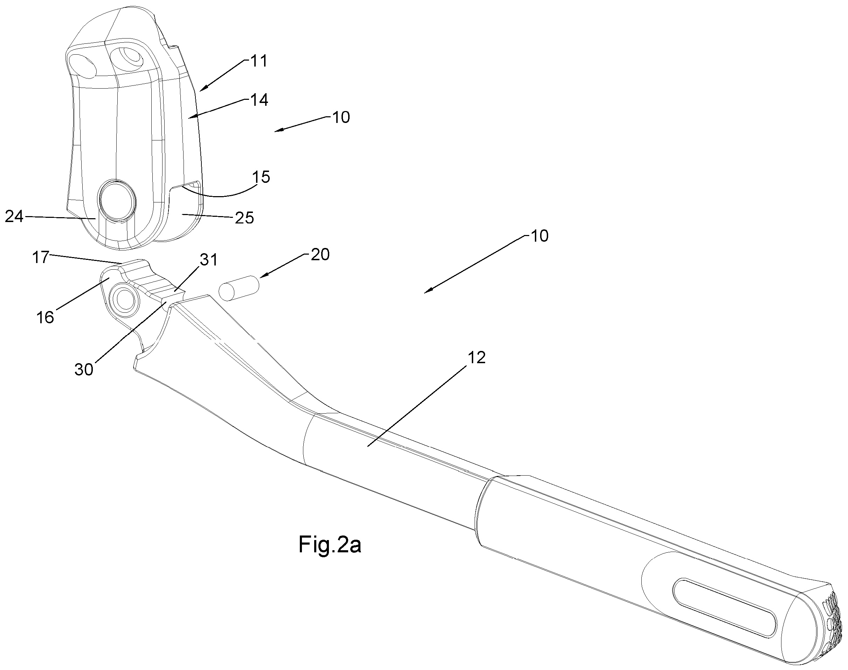

In the first embodiment of the invention shown in Figures 1, 2 and 2A, the anti-vibration body **20** consists of a cylinder made of a plastic material and stuck in a corresponding fixing seat **30.** The fixing seat **30** has an upper opening **31** from which said anti-vibration body **20** projects so as to come into contact with the lower edge **15.**

Thanks to this technical solution it is possible to eliminate, or at least drastically reduce, the noise generated by the impacts of the supporting rod **12** against the lower edge **15** of the back wall **14** of the fixing bracket **11.**

Said kickstand **10** according to the invention is also easy to assemble, since the anti-vibration body **20**, which is elastically deformable due to its very structure, can be easily forced so that it fits in its fixing seat **30.**

The anti-vibration body **20** is shaped in such a way that it protrudes from the upper opening **31** with a contact portion thereof that, in fact, is arranged so as to come into contact with the facing lower edge **15.**

In said first embodiment of the invention, the anti-vibration body **20**, which is cylindrical, is positioned with its axis of symmetry substantially parallel to the rotation axis of the fulcrum **27**, that is, parallel to the rotation axis of the supporting rod **12** with respect to the fixing bracket **11.**

Therefore, also the fixing seat **30** is defined so that it is cylindrical in shape with its longitudinal development axis parallel to said rotation axis of the fulcrum **27**, that is, parallel to the rotation axis of the supporting rod **12** with respect to the fixing bracket **11.**

In even greater detail, according to said first embodiment of the invention, the fixing seat **30** extends over the full width of the supporting rod **12**, and furthermore the cylindrical anti-vibration body **20** is defined so that its length is such as to occupy said fixing seat **30** for its entire length, as can be seen in Figure 2a.

Furthermore, according to the invention, the fixing seat **30** is defined in said supporting rod **12** in such a way that, according to a sectional plane that is orthogonal to the longitudinal development axis of said fixing seat **30**, the width of the upper opening **31** is smaller than the diameter of the fixing seat **30** itself and of the cylindrical anti-vibration body **20.**

Advantageously, this allows the anti-vibration body **20** to be inserted into the fixing seat **30** occupying more than half of its total volume, as can be seen in Figure 1, and, once it has been inserted, this configuration prevents the cylindrical anti-vibration body **20** itself from accidentally moving out of the fixing seat **30** itself.

Furthermore, the fixing seat **30** is defined in said supporting rod **12** in such a manner that, when the anti-vibration body **20** is inserted in said fixing seat **30**, the bases of the anti-vibration body **20** itself face the respective side walls **24**, **25** of the fixing bracket **11**, in all the relative positions which said supporting rod **12** can assume with respect to said fixing bracket **11.**

Advantageously, this prevents the anti-vibration body **20** from accidentally moving out of the fixing seat **30**, according to a direction corresponding to the longitudinal development axis of the fixing seat **30** itself, or laterally from said seat.

Obviously, any variant embodiment of the invention in which the anti-vibration body **20** is positioned differently is also to be understood as part of the invention.

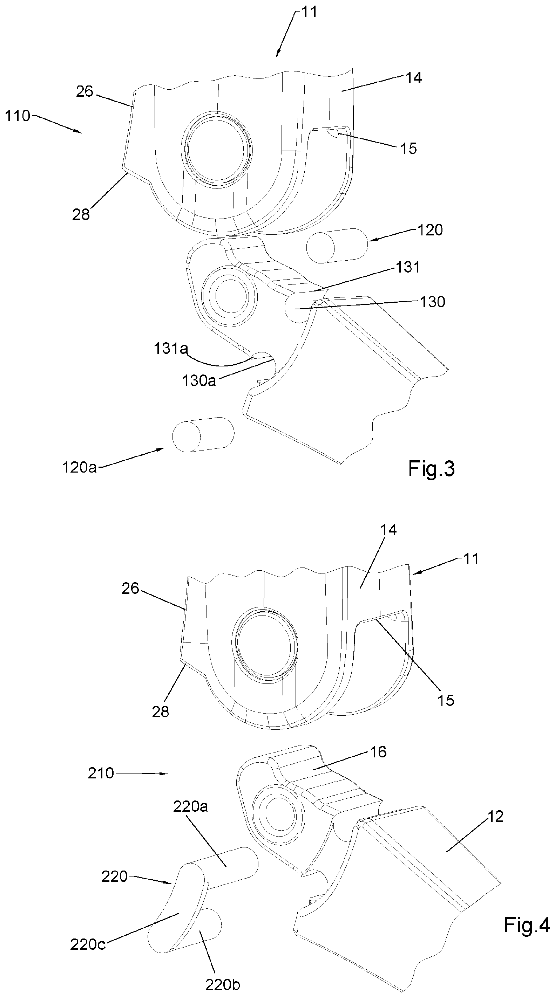

Figure 3 shows a second embodiment of a kickstand according to the invention, indicated therein by the number **110.**

Said kickstand **110** comprises two anti-vibration bodies **120** and **120a:**
- a first rear anti-vibration body **120,** positioned so that said rear anti-vibration body **120** is in contact with said lower edge **15** of said back wall **14** when said supporting rod **12** is in the raised resting position;
- a second front anti-vibration body **120a,** positioned so that said front anti-vibration body **120a** is in contact with a lower edge **28** of the front wall **26** when the supporting rod **12** is in the lowered working position.

In particular, the first rear anti-vibration body **120** consists of a cylinder made of a plastic material and stuck in a corresponding fixing seat **130**, wherein the fixing seat **130** has an upper opening **131** from which said rear anti-vibration body **120** projects so as to come into contact with the lower edge **15** of the back wall **14.**

The second front anti-vibration body **120a** consists of a cylinder made of a plastic material and stuck in a corresponding fixing seat **130a,** said fixing seat **130a** having a lower opening **131a** from which said front anti-vibration body **120a** projects so as to come into contact with the lower edge **28** of the front wall **26.**

A third embodiment of a kickstand according to the invention is shown in Figure 4 and indicated therein by the number **210.**

As can be seen in Figure 4, the anti-vibration body **220** comprises:
- a first rear anti-vibration body **220a,** positioned so that said rear anti-vibration body **220a** is in contact with said lower edge **15** of said back wall **14** when said supporting rod **12** is in said raised resting position;
- a second front anti-vibration body **220b,** positioned so that said front anti-vibration body **220b** is in contact with a lower edge **28** of the front wall **26** when the supporting rod **12** is in the lowered working position;
- a connection bridge element **220c** which is developed in such a way as to join the first rear anti-vibration body **220a** and said front anti-vibration body **220b.**

Said anti-vibration body **220** is therefore essentially configured in the shape of a C and is conveniently coupled with the supporting rod **12** through a simple manual movement.

The anti-vibration body **220** is made up of a single piece of plastic material.

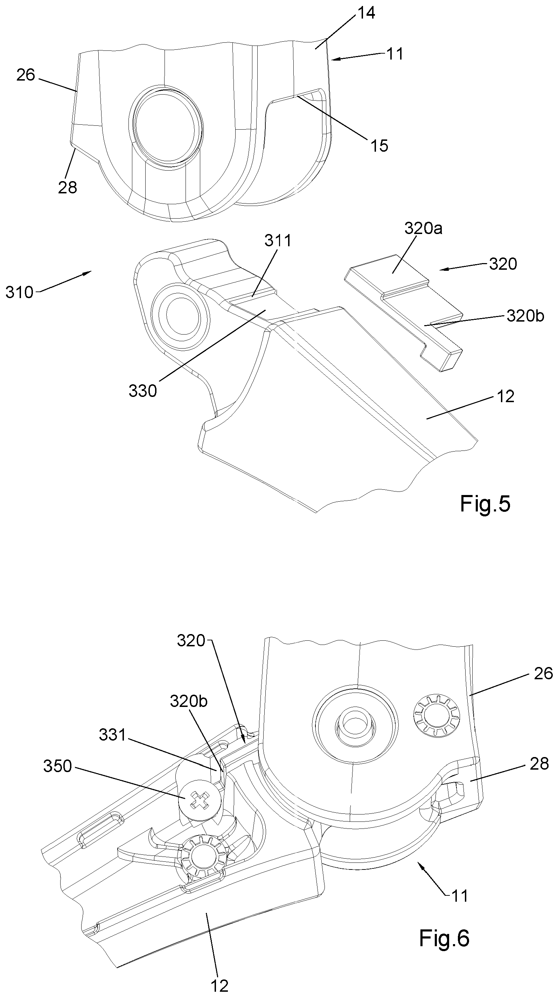

A fourth embodiment of a kickstand that is not part of the invention is shown in Figures 5 and 6 and is indicated therein by the number **310.**

Said kickstand **310** is characterized in that the anti-vibration body **320** comprises:
- a flat portion **320a** arranged in a corresponding fixing seat **330**;
- a fastening appendage **320b** configured to be fastened to said supporting rod **12.**

The fastening is obtained, for example, with a threaded element, for example a screw **350**; alternatively, the fastening appendage **320b** can be attached to the supporting rod **12** by gluing or fixing or through other means of a known type. The fixing seat **330** has an upper opening **331** from which said anti-vibration body **320** projects so as to come into contact with said lower edge **15** of the back wall **14.**

In a fifth embodiment of a kickstand that is not part of the invention, not illustrated herein for the sake of simplicity, the kickstand is characterized in that the anti-vibration body is fixed to the lower edge of the back wall of the fixing bracket, in such a position that the anti-vibration body is in contact with the supporting rod **12** when said supporting rod **12** is in said raised resting position.

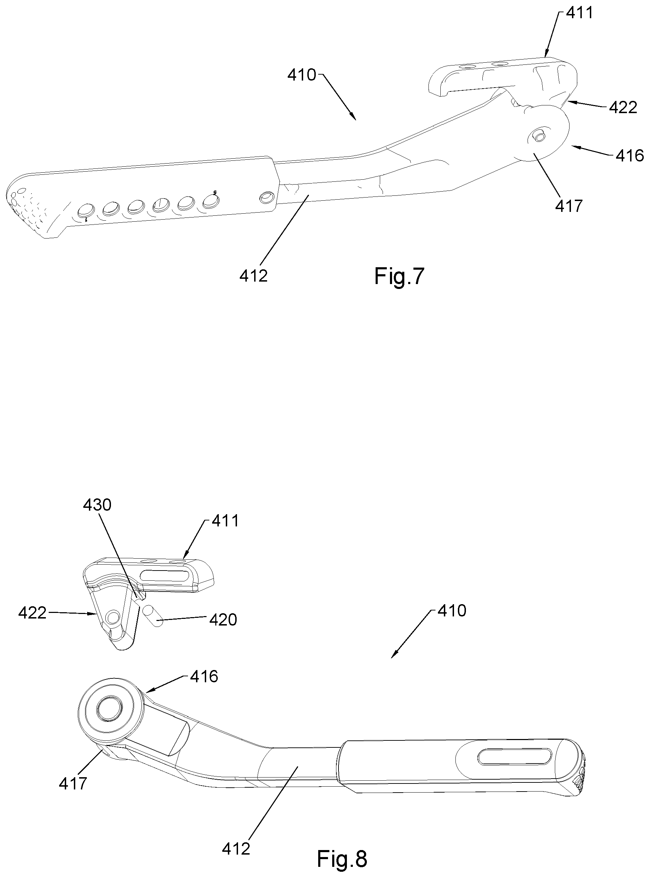

Another variant embodiment of a kickstand that is not part of the invention is shown in Figures 7 and 8; in these Figures 7 and 8, the kickstand is indicated as a whole by the number **410.**

In said variant embodiment of a kickstand that is not part of the invention, the reversible locking means comprise:
- a hinge head **416** of said supporting rod **412**, said hinge head **416** comprising a fork-shaped element **417**; the hinge head **416** is hinged to a cam-shaped appendage **422** defined on the fixing bracket **411;**
- a plate-shaped element positioned within a hinge compartment defined in the hinge head **416** and pushed against said cam-shaped appendage **422**;
- a coil spring positioned so as to push on the plate-shaped element inside the hinge compartment.

Compared to the preceding embodiments of the kickstand **10**, **110**, **210**, **310** described above, in this variant embodiment the reversible locking means have the fork-shaped element and the cam-shaped appendage in reversed positions.

In said variant embodiment, an anti-vibration body **420** is positioned, by way of example, on the cam-shaped appendage **422.**

By way of example, the anti-vibration body **420** consists of a cylinder made of a plastic material and stuck in a corresponding fixing seat **430.**

In the same manner as described above with reference to the other embodiments of the invention, the fixing seat **430** has an upper opening from which said anti-vibration body **420** projects so as to come into contact with an upper edge of the fork-shaped element **417.**

In general, the anti-vibration body **20**, **120**, **220**, **320** and **420** is made, for example, of synthetic rubber or another polymeric material capable of absorbing or damping vibrations.

It is to be understood that the anti-vibration body **20** can also be made of other technically equivalent materials, that is, materials capable of serving a vibration-absorbing function.

It is, of course, also to be understood that the anti-vibration body **20** comes in shapes different from that of a cylinder.

The anti-vibration body **20** can be parallelepiped or in other shapes suitable for fixing to the supporting rod **12** and for allowing the anti-vibration body **20** itself to come into contact with an opposite portion of the kickstand **10.**

In practice, it has been shown that the invention fulfils its task and achieves the set objects.

In particular, the invention provides a kickstand in which the vibrations of the supporting rod against the fixing bracket are practically cancelled out by the presence of an anti-vibration body mounted on the supporting rod itself; thanks to the mounting on the supporting rod, the anti-vibration body is not affected by the vibrations themselves and remains firmly in its position, as it cannot be accidentally separated from the kickstand itself.

In practice, the components and materials used, as well as the contingent dimensions and shapes, can be any according to the needs and the state of the art, as long as they are compatible with the specific use.

In the case where the characteristics and techniques mentioned in any of the claims are followed by reference signs, said reference signs are to be intended as affixed for the sole purpose of increasing the intelligibility of the claims and, consequently, said reference signs have no limiting effect on the interpretation of each element identified by way of example by said reference signs.

## Claims

1. Bicycle kickstand (10), comprising:
- a fixing bracket (11) configured to be fixed to a bicycle frame;
- a supporting rod (12), said supporting rod (12) being hinged to said fixing bracket (11) and being configured to assume a raised resting position, in which said supporting rod (12) is rotated upwards and adjacent to said bicycle frame, and a lowered working position, in which said supporting rod (12) is rotated downwards so that it rests on the ground;
- reversible locking means (13) configured to stabilize the position of said supporting rod (12) with respect to said fixing bracket (11), either in said raised resting position or in said lowered working position,
said fixing bracket (11) comprising a back wall (14) whose lower edge (15) is positioned in such a way that it comes into contact with said supporting rod (12) when said supporting rod (12) is in said raised resting position,
wherein said supporting rod (12) comprises an anti-vibration body (20) fixed in such a position that when said supporting rod (12) is in said raised resting position said anti-vibration body (20) is in contact with said lower edge (15) of said back wall (14),
said anti-vibration body (20) consists of a cylinder made of a plastic material and stuck in a corresponding fixing seat (30) **characterized in that** said corresponding fixing seat has its axis of symmetry substantially parallel to the rotation axis of said supporting rod (12) with respect to said fixing bracket (11), said fixing seat (30) having an upper opening (31) from which said anti-vibration body (20) projects so as to come into contact with said lower edge (15).

2. Kickstand according to claim 1, **characterized in that** said fixing seat (30) is defined so that it is cylindrical in shape with its longitudinal development axis parallel to said rotation axis of said supporting rod (12) with respect to said fixing bracket (11).

3. Kickstand according to claim 2, **characterized in that** said fixing seat (30) is defined in said supporting rod (12) in such a way that, according to a sectional plane that is orthogonal to the longitudinal development axis of said fixing seat (30), the width of said upper opening (31) is smaller than the diameter of said fixing seat (30) and of said cylindrical anti-vibration body (20).

4. Kickstand according to any of the preceding claims, **characterized in that** said fixing seat (30) extends over the entire width of the supporting rod (12), said cylindrical anti-vibration body (20) being defined so that its length is such as to occupy the entire length of said fixing seat (30).

5. Kickstand according to any of the preceding claims, **characterized in that** said reversible locking means (13) comprise:
- a hinge head (16) of said supporting rod (12), said hinge head (16) having a cam-shaped profile (17), said hinge head (16) being positioned in a hinge compartment (22) defined in said fixing bracket (11);
- a plate-shaped element (18) positioned within said hinge compartment (22) in said fixing bracket (11) and pushed against said cam-shaped profile (17);
- a coil spring (19) positioned so as to push on said plate-shaped element (18) inside said hinge compartment (22).

6. Kickstand according to claim 5, **characterized in that** said fixing bracket (11) comprises:
- two opposite side walls (24, 25);
- said back wall (14);
- a front wall (26),
said hinge head (16) being hinged to said side walls (24, 25) with a fulcrum (27).

7. Kickstand according to claim 6, **characterized in that** said fixing seat (30) is defined in said supporting rod (12) in such a manner that, when said cylindrical anti-vibration body (20) is inserted in said fixing seat (30), the bases of said cylindrical anti-vibration body (20) face one of said side walls (24, 25), in all the relative positions which said supporting rod (12) can assume with respect to said fixing bracket (11).

8. Kickstand according to one or more of the preceding claims, **characterized in that** it comprises two anti-vibration bodies (120, 120a):
- a first rear anti-vibration body (120), positioned so that said rear anti-vibration body (120) is in contact with said lower edge (15) of said back wall (14) when said supporting rod (12) is in said raised resting position;
- a second front anti-vibration body (120a), positioned so that said front anti-vibration body (120a) is in contact with a lower edge (28) of said front wall (26) when said supporting rod (12) is in said lowered working position.

9. Kickstand according to one or more of the preceding claims, **characterized in that** said anti-vibration body (220) comprises:
- a first rear anti-vibration body (220a), positioned so that said rear anti-vibration body (220a) is in contact with said lower edge (15) of said back wall (14) when said supporting rod (12) is in said raised resting position;
- a second front anti-vibration body (220b), positioned so that said front anti-vibration body (220b) is in contact with a lower edge (28) of said front wall (26) when said supporting rod (12) is in said lowered working position;
- a connection bridge element (220c) which is developed in such a way as to join said first rear anti-vibration body (220a) and said front anti-vibration body (220b).

## Patentansprüche

1. Fahrradständer (10), umfassend:
- eine Befestigungshalterung (11), die dazu konfiguriert ist, an einem Fahrradrahmen befestigt zu werden;
- eine Stützstange (12), wobei die besagte Stützstange (12) an der besagten Befestigungshalterung (11) angelenkt ist und so konfiguriert ist, dass sie die folgenden Positionen einnimmt: eine angehobene Ruheposition, in der die besagte Stützstange (12) nach oben gedreht und benachbart zum besagten Fahrradrahmen ist, und eine abgesenkte Arbeitsposition, in der die besagte Stützstange (12) nach unten gedreht ist, sodass sie auf dem Boden aufliegt;
- reversible Verriegelungsmittel (13), die dazu konfiguriert sind, um die Position der besagten Stützstange (12) in Bezug auf die besagte Befestigungshalterung (11) entweder in der besagten angehobenen Ruheposition oder in der besagten abgesenkten Arbeitsposition zu stabilisieren,
wobei die besagte Befestigungshalterung (11) eine Rückseite (14) umfasst, deren untere Kante (15) derart positioniert ist, dass sie mit der besagten Stützstange (12) in Kontakt kommt, wenn sich die besagte Stützstange (12) in der besagten angehobenen Ruheposition befindet,
wobei die besagte Stützstange (12) einen Antivibrationskörper (20) umfasst, der in einer solchen Position befestigt ist, dass, wenn sich die besagte Stützstange (12) in der besagten angehobenen Ruheposition befindet, der besagte Antivibrationskörper (20) in Kontakt mit der besagten unteren Kante (15) der besagten Rückseite (14) ist,
der besagte Antivibrationskörper (20) aus einem Zylinder aus einem Kunststoffmaterial besteht und in einen entsprechenden Befestigungssitz (30) gesteckt ist,
**dadurch gekennzeichnet, dass** die Symmetrieachse des besagten entsprechenden Befestigungssitzes im Wesentlichen parallel zur Drehachse der besagten Stützstange (12) in Bezug auf die besagte Befestigungshalterung (11) ist, wobei der besagte Befestigungssitz (30) eine obere Öffnung (31) aufweist, aus der der besagte Antivibrationskörper (20) herausragt, um mit der besagten unteren Kante (15) in Kontakt zu kommen.

2. Ständer nach Patentanspruch 1, **dadurch gekennzeichnet, dass** der besagte Befestigungssitz (30) so definiert ist, dass er eine zylindrische Form aufweist, mit seiner Längserstreckungsachse parallel zur besagten Drehachse der besagten Stützstange (12) in Bezug auf die besagte Befestigungshalterung (11).

3. Ständer nach Patentanspruch 2, **dadurch gekennzeichnet, dass** der besagte Befestigungssitz (30) derart in der besagten Stützstange (12) definiert ist, dass gemäß einer Schnittebene, die orthogonal zur Längserstreckungsachse des besagten Befestigungssitzes (30) ist, die Breite der besagten oberen Öffnung (31) kleiner ist als der Durchmesser des besagten Befestigungssitzes (30) und des besagten zylindrischen Antivibrationskörpers (20).

4. Ständer nach jeglichem der vorhergehenden Patentansprüche, **dadurch gekennzeichnet, dass** sich der besagte Befestigungssitz (30) über die gesamte Breite der Stützstange (12) erstreckt, wobei der besagte zylindrische Antivibrationskörper (20) so definiert ist, dass seine Länge die gesamte Länge des besagten Befestigungssitzes (30) belegt.

5. Ständer nach jeglichem der vorhergehenden Patentansprüche, **dadurch gekennzeichnet, dass** die besagten reversiblen Verriegelungsmittel (13) Folgendes umfassen:
- einen Scharnierkopf (16) der besagten Stützstange (12), wobei der besagte Scharnierkopf (16) ein nockenförmiges Profil (17) aufweist, wobei der besagte Scharnierkopf (16) in einem Scharnierfach (22) positioniert ist, das in der besagten Befestigungshalterung (11) definiert ist;
- ein plattenförmiges Element (18), das innerhalb des besagten Scharnierfachs (22) in der besagten Befestigungshalterung (11) positioniert ist und gegen das besagte nockenförmige Profil (17) gedrückt wird;
- eine Schraubenfeder (19), die so positioniert ist, dass sie auf das besagte plattenförmige Element (18) innerhalb des besagten Scharnierfachs (22) drückt.

6. Ständer nach Patentanspruch 5, **dadurch gekennzeichnet, dass** die besagte Befestigungshalterung (11) Folgendes umfasst:
- zwei gegenüberliegende Seiten (24, 25);
- die besagte Rückseite (14);
- eine Vorderseite (26),
wobei der besagte Scharnierkopf (16) mit einem Drehpunkt (27) an den besagten Seiten (24, 25) angelenkt ist.

7. Ständer nach Patentanspruch 6, **dadurch gekennzeichnet, dass** der besagte Befestigungssitz (30) in der besagten Stützstange (12) derart definiert ist, dass, wenn der besagte zylindrische Antivibrationskörper (20) in den besagten Befestigungssitz (30) eingesetzt ist, die Basen des besagten zylindrischen Antivibrationskörpers (20) in allen Relativpositionen, die die besagte Stützstange (12) in Bezug auf die besagte Befestigungshalterung (11) einnehmen kann, einer der besagten Seiten (24, 25) zugewandt sind.

8. Ständer nach einem oder mehreren der vorhergehenden Patentansprüche, **dadurch gekennzeichnet, dass** er zwei Antivibrationskörper (120, 120a) umfasst:
- einen ersten hinteren Antivibrationskörper (120), der so positioniert ist, dass der besagte hintere Antivibrationskörper (120) in Kontakt mit der besagten unteren Kante (15) der besagten Rückseite (14) ist, wenn sich die besagte Stützstange (12) in der besagten angehobenen Ruheposition befindet;
- einen zweiten vorderen Antivibrationskörper (120a), der so positioniert ist, dass der besagte vordere Antivibrationskörper (120a) in Kontakt mit einer unteren Kante (28) der besagten Vorderseite (26) ist, wenn sich die besagte Stützstange (12) in der besagten abgesenkten Arbeitsposition befindet.

9. Ständer nach einem oder mehreren der vorhergehenden Patentansprüche, **dadurch gekennzeichnet, dass** der besagte Antivibrationskörper (220) Folgendes umfasst:
- einen ersten hinteren Antivibrationskörper (220a), der so positioniert ist, dass der besagte hintere Antivibrationskörper (220a) in Kontakt mit der besagten unteren Kante (15) der besagten Rückseite (14) ist, wenn sich die besagte Stützstange (12) in der besagten angehobenen Ruheposition befindet;
- einen zweiten vorderen Antivibrationskörper (220b), der so positioniert ist, dass der besagte vordere Antivibrationskörper (220b) in Kontakt mit einer unteren Kante (28) der besagten Vorderseite (26) ist, wenn sich die besagte Stützstange (12) in der besagten abgesenkten Arbeitsposition befindet;
- ein Verbindungsbrückenelement (220c), das derart ausgebildet ist, dass es den besagten ersten hinteren Antivibrationskörper (220a) und den besagten vorderen Antivibrationskörper (220b) verbindet.

## Revendications

1. Béquille de vélo (10), comprenant:
- un étrier de fixation (11) configuré pour être fixé sur un cadre de vélo;
- une tige de support (12), ladite tige de support (12) étant articulée sur ledit étrier de fixation (11) et étant configurée pour prendre une position de repos relevée, dans laquelle ladite tige de support (12) est tournée vers le haut et adjacente audit cadre de vélo, et une position de travail abaissée, dans laquelle ladite tige de support (12) est tournée vers le bas de sorte qu'elle repose sur le sol;
- des moyens de verrouillage réversibles (13) configurés pour stabiliser la position de ladite tige de support (12) par rapport audit étrier de fixation (11), soit dans ladite position de repos relevée, soit dans ladite position de travail abaissée,
ledit étrier de fixation (11) comprenant une paroi arrière (14) dont le bord inférieur (15) est positionné de manière à entrer en contact avec ladite tige de support (12) lorsque ladite tige de support (12) se trouve dans ladite position de repos relevée,
où ladite tige de support (12) comprend un corps anti-vibration (20) fixé dans une position telle que lorsque ladite tige de support (12) se trouve dans ladite position de repos relevée, ledit corps anti-vibration (20) est en contact avec ledit bord inférieur (15) de ladite paroi arrière (14),
ledit corps anti-vibration (20) consiste en un cylindre réalisé en matière plastique et encastré dans un siège de fixation correspondant (30),
**caractérisée en ce que** ledit siège de fixation correspondant présente son axe de symétrie sensiblement parallèle à l'axe de rotation de ladite tige de support (12) par rapport audit étrier de fixation (11), ledit siège de fixation (30) ayant une ouverture supérieure (31) de laquelle ledit corps anti-vibration (20) fait saillie de manière à entrer en contact avec ledit bord inférieur (15).

2. Béquille selon la revendication 1, **caractérisée en ce que** ledit siège de fixation (30) est défini de manière à être de forme cylindrique avec son axe de développement longitudinal parallèle audit axe de rotation de ladite tige de support (12) par rapport audit étrier de fixation (11).

3. Béquille selon la revendication 2, **caractérisée en ce que** ledit siège de fixation (30) est défini dans ladite tige de support (12) de telle sorte que, selon un plan de coupe orthogonal à l'axe de développement longitudinal dudit siège de fixation (30), la largeur de ladite ouverture supérieure (31) est inférieure au diamètre dudit siège de fixation (30) et dudit corps anti-vibration cylindrique (20).

4. Béquille selon l'une quelconque des revendications précédentes, **caractérisée en ce que** ledit siège de fixation (30) s'étend sur toute la largeur de la tige de support (12), ledit corps anti-vibration cylindrique (20) étant défini de telle sorte que sa longueur est telle qu'il occupe toute la longueur dudit siège de fixation (30).

5. Béquille selon l'une quelconque des revendications précédentes, **caractérisée en ce que** lesdits moyens de verrouillage réversibles (13) comprennent:
- une tête de charnière (16) de ladite tige de support (12), ladite tête de charnière (16) présentant un profil en forme de came (17), ladite tête de charnière (16) étant positionnée dans un logement de charnière (22) défini dans ledit étrier de fixation (11);
- un élément en forme de plaque (18) positionné dans ledit logement de charnière (22) dans ledit étrier de fixation (11) et poussé contre ledit profil en forme de came (17);
- un ressort hélicoïdal (19) positionné de manière à pousser sur ledit élément en forme de plaque (18) à l'intérieur dudit logement de charnière (22).

6. Béquille selon la revendication 5, **caractérisée en ce que** ledit étrier de fixation (11) comprend:
- deux parois latérales opposées (24, 25);
- ladite paroi arrière (14);
- une paroi avant (26),
ladite tête de charnière (16) étant articulée à l'aide d'un pivot (27) sur lesdites parois latérales (24, 25).

7. Béquille selon la revendication 6, **caractérisée en ce que** ledit siège de fixation (30) est défini dans ladite tige de support (12) de telle sorte que, lorsque ledit corps anti-vibration cylindrique (20) est inséré dans ledit siège de fixation (30), les bases dudit corps anti-vibration cylindrique (20) font face à l'une desdites parois latérales (24, 25), dans toutes les positions relatives que peut prendre ladite tige de support (12) par rapport audit étrier de fixation (11).

8. Béquille selon l'une ou plusieurs des revendications précédentes, **caractérisée en ce qu'**elle comprend deux corps anti-vibration (120, 120a):
- un premier corps anti-vibration arrière (120), positionné de sorte que ledit corps anti-vibration arrière (120) soit en contact avec ledit bord inférieur (15) de ladite paroi arrière (14) lorsque ladite tige de support (12) se trouve dans ladite position de repos relevée;
- un deuxième corps anti-vibration avant (120a), positionné de sorte que ledit corps anti-vibration avant (120a) soit en contact avec un bord inférieur (28) de ladite paroi avant (26) lorsque ladite tige de support (12) se trouve dans ladite position de travail abaissée.

9. Béquille selon l'une ou plusieurs des revendications précédentes, **caractérisée en ce que** ledit corps anti-vibration (220) comprend:
- un premier corps anti-vibration arrière (220a), positionné de sorte que ledit corps anti-vibration arrière (220a) soit en contact avec ledit bord inférieur (15) de ladite paroi arrière (14) lorsque ladite tige de support (12) se trouve dans ladite position de repos relevée;
- un deuxième corps anti-vibration avant (220b), positionné de sorte que ledit corps anti-vibration avant (220b) soit en contact avec un bord inférieur (28) de ladite paroi avant (26) lorsque ladite tige de support (12) se trouve dans ladite position de travail abaissée;
- un pont de connexion (220c) qui est développé de manière à relier ledit premier corps anti-vibration arrière (220a) et ledit corps anti-vibration avant (220b).
